(19) Europäisches Patentamt
European Patent Office
Office européen des brevets

(11) Publication number: **0 237 873 B1**

(12) # EUROPEAN PATENT SPECIFICATION

(45) Date of publication of patent specification: **22.06.94**

(51) Int. Cl.[5]: **G11B 7/24**

(21) Application number: **87103119.1**

(22) Date of filing: **05.03.87**

(54) **Optical recording medium.**

(30) Priority: **06.03.86 JP 47234/86**

(43) Date of publication of application:
**23.09.87 Bulletin 87/39**

(45) Publication of the grant of the patent:
**22.06.94 Bulletin 94/25**

(84) Designated Contracting States:
**DE FR GB**

(56) References cited:
**EP-A- 0 116 381**
**US-A- 4 412 231**
**US-A- 4 652 514**

**PATENT ABSTRACTS OF JAPAN, vol. 4, no. 128 (M-31)[610], 9th September 1980, page 9 M 31 & JP-A-55 86 787**

**PATENT ABSTRACTS OF JAPAN, vol. 10, no. 55 (M-458)(2112), 5 March 1986 & JP-A-60 204 396**

(73) Proprietor: **CANON KABUSHIKI KAISHA**
**30-2, 3-chome, Shimomaruko,**
**Ohta-ku**
**Tokyo(JP)**

(72) Inventor: **Yoshihiro, Oguchi**
**36-17, Fujigaoka 2-chome**
**Midori-ku Yokohama-shi Kanagawa-ken(JP)**
Inventor: **Yoshio, Takasu**
**6-7-405, Toyogaoka 2-chome**
**Tama-shi Tokyo(JP)**

(74) Representative: **Bühling, Gerhard, Dipl.-Chem. et al**
**Patentanwaltsbüro**
**Tiedtke-Bühling-Kinne & Partner**
**Bavariaring 4**
**D-80336 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 237 873 B1

## Description

This invention relates to a novel optical recording medium which performs recording and reproduction of informations by irradiating laser beam for recording and reproduction. More particularly, the present invention relates to an optical recording medium improved in S/N ratio having a recording layer on a substrate, wherein the recording layer contains at least a dye compound and a reflective organic compound mixed therein.

### Related Background Art

Heretofore, an optical recording medium having a dye compound applied as the recording layer has been known. When a dye compound is used for the recording layer, due to its low thermal conductivity, the energy of the recording light can be effectively utilized. Also, light absorption by a dye compound has the property of becoming maximum at a specific wavelength, and yet its wavelength differs from dye to dye, whereby there is the advantage that a dye compound can be selected corresponding to the wavelength of the light for recording and reproduction.

Even for a recording layer comprising a dye compound having such advantage, similarly as for a recording layer of other optical recording media, in order to make recording possible with less light intensity and obtain greater reproduction signal to noise ratio (S/N ratio), it is required that the recording layer should have light absorbability as large as possible relative to recording light and reflectivity as large as possible relative to the reproducing light.

However, the recording layer by use of a dye compound having the absorption maximum near the wavelength of the recording light, due to low light reflectance relative to the reproducing light during reproduction in general utilizing the reproducing light with the same wavelength of the recording light, cannot obtain sufficient contrast of reproduced signals. For this reason, there has been proposed the method of providing a metal reflective layer between the substrate and the recording layer (Japanese Laid-open Patent Publication No. 16948/1981). However, in such an optical recording medium, recording from the metal reflective layer side with higher light reflectance can be done with difficulty. On the contrary, when recording is performed from the recording layer side, errors in recording and reproduction of information are liable to be caused, for example, by the dust attached on the recording layer. Further, the metal which is the material for the reflective layer has higher thermal conductivity and therefore also has the drawback of lowering recording sensitivity.

The JP-60-204396-A discloses an optical recording medium having no reflection layer but a recording layer containing a mixture of cyanine pigments. The one cyanine pigment has a maximum wavelength of absorption ranging from (-40 nm) to (+70 nm) of the wavelength of a recording light, and the other cyanine pigment has a maximum wavelength of reflection ranging from (-40 nm) to (+70 nm) of the wavelength of the reproduction light. This is reflected in the preamble of claim 1.

### SUMMARY OF THE INVENTION

The present invention has been accomplished in view of the problems as described above, and an object of the present invention is to provide an optical recording medium which can make avail of the advantages of the recording layer comprising a dye compound and yet can realize improvement of sensitivity and S/N ratio.

Another object of the present invention is to provide an optical recording medium which can obtain sufficiently good reproduction characteristics without provision of a metal reflective layer which, while improving the reproduction characteristics, requires superfluous working in preparation and also makes recording from one side difficult.

Still another object of the present invention is to provide an optical recording medium exhibiting high durability such as small deterioration of the reproduction characteristics with lapse of time.

According to an aspect of the present invention, there is provided an optical recording medium according to claim 1.

### BRIEF DESCRIPTION OF THE DRAWINGS

Fig. 1 through Fig. 4 are each sectional view of the optical recording medium of the present invention. Fig. 5 is a sectional view of an embodiment in which the optical recording medium of the present invention shown in Fig. 1 is made to have a hollow structure.

## DETAILED DESCRIPTION OF THE PREFERRED EMBODIMENTS

The present invention is an optical recording medium which performs recording and reproduction by irradiating a laser beam onto a recording layer, wherein the recording layer comprises at least a dye compound (A) having the absorption maximum near the wavelength of the recording laser beam and a reflective organic compound (B) which is a substance not having absorption necessary for recording relative to the recording laser beam and having high reflectance relative to the reproducing light with the same wavelength as that of the recording laser beam.

The fact that the reflective organic compound (B) does not have absorption necessary for recording relative to the recording laser beam is equivalent to that it absorbs substantially no recording laser beam. That is, it means that a layer composed of the reflective organic compound (B) alone will not cause thermal deformation to the extent capable of practical recording, in case of a quantity of minimum recording energy necessary for performing practical recording on the recording layer containing the dye compound (A) and the reflective organic compound (B). The extent of the high reflectance exhibited by the reflective organic compound (B) to the reproducing light may be within the range higher than the value of the reflectance exhibited by the dye compound (A) to the reproducing light.

When a laser beam is irradiated onto the recording layer of the above optical recording medium, the light energy of the laser beam is absorbed by the dye compound (A) having the absorption maximum near the wavelength of the laser beam, which is in turn converted to heat energy and causes thermal deformation in the recording layer. As the result, recording is effected. Thermal deformation refers to any deformation caused by heat such as melting, evaporation, agglomeration and others.

Reproduction is performed by detecting the signal from the difference in light reflectance between the above thermally deformed region and the non-deformed region. If the recording layer consists only of a dye compound (A) having the absorption maximum near the wavelength of the recording laser beam, when the same laser beam is used for reproduction or laser beam having substantially the same wavelength as that of the recording laser beam, due to low light reflectance at the non-deformed region, S/N ratio tends to become smaller. However, since the recording layer in the present invention contains a reflective organic compound (B) not having absorption necessary for recording relative to the recording light and having high reflectance relative to the reproducing light with the same wavelength as that of the recording laser beam, in addition to the dye compound (A), the effect such as improvement of reflectance of the recording layer relative to the producing light, etc., can be generated to improve S/N ratio.

Also, the dye compound (A) having the absorption maximum near the wavelength of the recording laser beam may be sometimes readily deteriorated in the storage test under the environment of high temperature and high humidity, or outside light, etc. However, by incorporating a reflective organic compound (B) which enhances light reflectance relative to the reproducing light mixed with the dye compound (A), a stable optical recording medium with little change in characteristic even in the storage deterioration test can be obtained. This may be estimated to be because crystallization of the dye compound (A) can be prevented by the mixed presence of the reflective organic compound.

In the optical recording medium of the present invention, it is also conceivable to use an inorganic compound absorbing substantially no recording laser beam and having high reflectance relative to the reproducing light in place of the reflective organic compound (B), but it is not suitable from the standpoint in difficult formation of a uniform recording layer, etc., to form a recording layer by mixing it with a dye compound (A) which is an organic compound.

The light reflectance of the recording layer is preferably 10 % or higher, particularly 15 % or higher, in order to obtain sufficient sensitivity and S/N ratio to irradiation of the reproduction laser beam from the substrate side.

On the other hand, it is also preferable that tha value of the absorption maximum wavelength of the dye compound (A) is within the range of ±50 nm of the wavelength of the recording laser beam, and the difference between the value of the absorption maximum wavelength of the dye compound (A) and the wavelength of the recording laser beam is smaller than, particularly 1/2 or less of the difference between the value of the absorption maximum wavelength of the reflective organic compound (B) and the wavelength of the recording laser beam.

The optical recording medium has been described above in connection with the recording laser beam. Next, the optical properties of the dye compound (A) and the reflective organic compound (B) are described so as to satisfy the relationship with the recording laser beam wavelength as described above.

The absorption maximum wavelength of a thin layer of a dye compound and the reflection maximum wavelength are generally different. When the dye compound with absorption maximum wavelength corresponding to the wavelength of the recording laser beam is used, the reflectance becomes low. On the

other hand, the contrast ratio of reproduction signal becomes large in proportion to the difference in reflectance between the recorded portion and non-recorded portion. From such a viewpoint, it is preferable that the reflectance of the reflective organic compound relative to the light with the absorption maximum wavelength of the dye compound (A) is 10 % or higher and the reflectance of the reflective organic compound (B) is greater than the reflectance of the dye compound (A) relative to the light with said absorption maximum wavelength, particularly greater by the value of the reflectance of the dye compound (A) plus 3 %. Also, in this case, substantially almost all of the reflection at the recorded portion is the reflection from the substrate surface and small, for example, in case of a glass substrate, about 5 %. Therefore, the ratio of the reflection at the non-recorded portion to the reflection at the recorded portion is sufficiently made large. From this point, it is preferable that the reflectance of the reflective organic compound (B) relative to the light with the absorption maximum wavelength of the dye compound (A) is 15 % or higher.

Reflectances of the dye compound (A) and reflective organic compound (B) are values measured according to the method as shown below.

That is, the reflectance of a thin film of dye formed on a slide glass substrate by coating or vapor deposition is measured from the substrate side by using a spectrophotometer with 15° regular reflection.

Referring now to the typical embodiments shown in Figs. 1 through 4, the present invention is described in detail. Fig. 1 shows an enlarged sectional view of the basic embodiment of the optical recording medium of the present invention, numeral 1 is a substrate, and substrates for recording medium generally known in the art in shape of a plate or a film comprising glass, metal, ceramic, paper or a synthetic resin such as polymethyl methacrylate, polycarbonate, etc., can be used. However, when performing fine pit recording with laser beam, etc., a material excellent in dimensional stability such as dimensional precision, plane smoothness, etc., is preferred. On the other hand, when light is irradiated from the substrate 1 side, it is preferable to use a material which is as transparent as possible to the irradiated light.

Numeral 2 is a recording layer. The recording layer 2 contains at least a dye compound (A) having the absorption maximum near the wavelength of the recording laser beam and the reflective organic compound (B) not having absorption necessary for recording relative to the recording laser beam but having high reflectance relative to the light. The film thickness of the recording layer 2 is preferably about 0.01 µm to 20 µm, and further it is preferably as thin as possible, provided that a thin layer having sufficient light absorbability for thermal deformation of the recording layer to the recording laser beam and sufficient light reflectivity to the reproduction laser beam can be stably formed.

The dye compound (A) having the absorption maximum near the wavelength of the recording laser beam is required to be selected suitably depending on the wavelength of the laser beam used, and may include, for example, azo, stilbenephthalocyanine type direct dyes including cyanine, melocyanine, triphenylmethane, naphthoquinone, xanthene, squaric acid salt, azulene, methine and pyrylium; azo, anthraquinone, triphenylmethane, xanthene, azine type acidic dyes; cyanine, azo, azine, triphenylmethane, azulene, methine, pyrylium type basic dyes; azo, anthraquinone, xanthene, triphenylmethane type mordant, acidic mordant dyes; anthraquinone, indigoid type vat dyes; azo, anthraquinone, phthalocyanine, triphenylmethane type oil-soluble dyes, sulfide dyes; and dithiol type metal complexes, etc.

On the other hand, the reflective organic compound (B) also depends on the laser beam to be used, but may include, for example, azo, stilbenephthalocyanine type direct dyes including cyanine, melocyanine, triphenylmethane, naphthoquinone, xanthene, squaric acid salt, azulene, methine and pyrilium; azo, anthraquinone, triphenylmethane, xanthene, azine type acidic dyes; cyanine, azo, azine, triphenylmethane, azulene, methine, pyrylium type basic dyes; azo, anthraquinone, xanthene, triphenylmethane type mordant, acidic mordant dyes; anthraquinone, idigoid type vat dyes; azo, anthraquinone, phthalocyanine, triphenylmethane type oil-soluble dyes, sulfide dyes and metal complexes such as dithiol type, etc.

Although the same compounds as mentioned for the dye compounds (A) are included as the reflective organic compound (B), of course, the dye compound (A) and the reflective organic compound (B) will never be the same compound in one recording layer.

The recording layer 2 may be formed according to various methods such as vapor deposition or coating. When coating is used, it can be formed by applying a solution containing the dye compound (A) and the reflective organic compound (B) dissolved or dispersed in an organic solvent. If necessary, in view of film forming property and coated film stability, film formation can be also effected with a resin binder mixed in the above compounds (A) and (B).

The organic solvent which can be used during coating may differ depending on whether the compounds (A), (B) as described above are dispersed or dissolved, but may generally include alcohols such as methanol, ethanol, isopropanol, diacetoalcohol, etc.; ketones such as acetone, methyl ethyl ketone,

cyclohexanone, etc.; amides such as N,N-dimethylformamide, N,N-dimethylacetamide, etc.; sulfoxides such as dimethyl sulfoxide, etc.; ethers such as tetrahydrofuran, dioxane, ethylene glycol monomethyl ether, etc.; esters such as methyl acetate, ethyl acetate, butyl acetate, etc.; aliphatic halogenated hydrocarbons such as chloroform, methylene chloride, dichloroethylene, carbon tetrachloride, trichloroethylene, etc.; or aromatics such as benzene, toluene, xylene, ligroine, monochlorobenzene, dichlorobenzene, etc. Preferable binders which may be used, if necessary, can be also selected from a wide scope of resins. Specific examples may include cellulose esters such as nitrocellulose, cellulose phosphate, cellulose sulfate, cellulose acetate, cellulose propionate, cellulose butyrate, cellulose myristate, cellulose palmitate, cellulose acetate propionate, cellulose acetate butyrate, etc.; cellulose ethers such as methyl cellulose, ethyl cellulose, propyl cellulose, butyl cellulose, etc.; vinyl resins such as polystyrene, polyvinyl chloride, polyvinyl acetate, polyvinylbutyral, polyvinylacetal, polyvinyl alcohol, polyvinylpyrrolidone, etc.; copolymer resins such as styrene-butadiene copolymer, styrene-acrylonitrile copolymer, styrene-butadiene-acrylonitrile copolymer, vinyl chloride-vinyl acetate copolymer, etc.; acrylic resins such as polymethyl methacrylate, polymethyl acrylate, polybutyl acrylate, polyacrylic acid, polymethacrylic acid, polyacrylamide, polyacrylonitrile, etc.; polyesters such as polyethylene terephthalate, etc.; polyarylate resins such as poly(4,4′-isopropylidenediphenylene-co-1,4-cyclohexylenedimethylenecarbonate), poly(ethylenedioxy-3,3′-phenylenethiocarbonate), poly(4,4′-isopropylidenediphenylenecarbonate-co-terephthalate),poly(4,4′-isopropylidenediphenylenecarbonate), poly(4,4′-sec-butylidenediphenylenecarbonate), poly(4,4′-isopropylidenediphenylenecarbonate-block-oxyethylene),etc.; or polyamides, polyimides, epoxy resins, phenol resins, polyolefins such as polyethylene, polypropylene, chlorinated polyethylene; and so on.

Coating can be practiced by use of the coating method such as dip coating, spray coating, spinner coating, bead coating, Meyer bar coating, blade coating, roller coating, curtain coating, etc.

As shown in Fig. 2, a protective layer 3 transparent to the laser beam for recording and reproduction can be provided on the recording layer 2. The protective layer 3 may be also opaque when light is irradiated from the side of the substrate 1. Also, as shown in Fig. 3, for improvement of adhesion strength, mechanical strength, loss of thermal conduction to the substrate, etc., a subbing layer 4 comprising, for example, a resin thin film may be also provided between the substrate 1 and the recording layer 2. Further, as shown in Fig. 4, a concavo-convex shaped servotrack 5 may be previously formed on the substrate 1 and a recording layer 2 may be formed thereon, whereby it can be utilized as the optical recording medium exclusively for reproduction or the optical recording medium for recording and reproduction equipped with guide track.

Further, as shown in Fig. 5, the optical recording medium can be made to have a hollow structure. That is, the recording medium shown in Fig. 5 comprises 2 optical recording media having the structure shown in Fig. 1 plastered in shape of a sandwich through a spacer 6 so that the space between the both recording layers may become hollow, and the both surfaces can be used as the recording layer to be highly useful in practical application. Moreover, with such a constitution, the recording layer 1 can be shielded from the outer atmosphere without imparing sensitivity to be protected from adhesion of dust, generation of flaws and contact with harmful gases, whereby its storability can be further improved.

According to the present invention as described in detail above, the recording layer can improve light reflectance relative to the laser beam for reproduction substantially without lowering light absorbance relative to the laser beam for recording, whereby S/N ratio and storage stability can be remarkably improved. Besides, it can be realized without provision of a metal reflective layer which has shortcomings, while improving reproduction characteristics. Accordingly, it becomes possible to perform recording and reproduction of informations by irradiation of recording light and reproducing light from the transparent substrate side, and also the specific feature of simple protection of the recording layer can be also maintained. Further, the effect that the threshold characteristic becomes more distinct was also ascertained.

As the result, for example, it has become possible to prepare a compact optical recording device by use of a smaller type semiconductor laser beam capable of direct modulation.

The present invention is described in more detail by referring to the following Example.

Example 1

A dye compound (A) (Structural formula 1) and a reflective substance (B) (Structural formula 2):

(Structural formula 1)

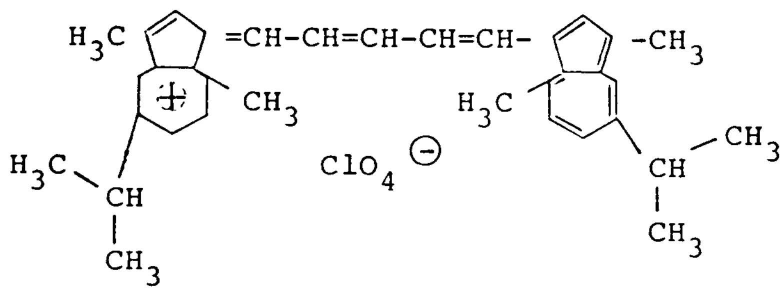

Absorption maximum (nm) 805 nm

(Structural formula 2)

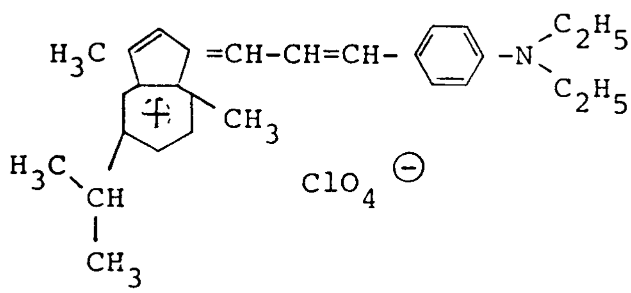

Absorption maximum (nm) 720 nm

were dissolved at a mixing ratio of 2 : 1 in dichloroethane, and the solution was applied on a glass disc substrate with a thickness of 1.2 mm and a diameter of 20 cm by a rotatory coating machine to a dried film thickness of 100 nm (1000 Å) to provide a recording layer, thus obtaining an optical recording medium of Example 1.

Comparative Example 1

An optical recording medium of Comparative Example 1 was prepared according to entirely the same method as in Example 1 except for omitting the reflective substance (B) (Structural formula 2) in Example 1. The optical recording media prepared in the above Example 1 and Comparative Example 1 were subjected to measurement of transmittance (T) and reflectance (R) at 820 nm. Measurement was practiced by irradiating light from the substrate side.

Next, the above optical recording medium was mounted on a turn table, and recording was practiced by irradiating a Ga-Aℓ-As semiconductor laser (oscillation wavelength: 820 nm) of an output of 8 mW at frequency of 1 MHz on the recording medium in shape of a track from the glass substrate side, while giving the turn table a rotation of 1800 rpm by means of a motor, and the S/N ratio during reproduction with the same semiconductor laser at an output of 1 mW were compared. Further, after the optical recording medium having performed recording thereon was left to stand under an environment of 60 °C and 85%RH for 1000 hours, transmittance, reflectance and S/N ratio were measured in the same manner as described above.

The results are shown in Table 1 and Table 2.

Table 1

| | Initial characteristics | | 60 °C 85%RH after 1000 hours | |
|---|---|---|---|---|
| | Transmittance (T) (%) | Reflectance (R) (%) | Transmittance (T) (%) | Reflectance (R) (%) |
| Example 1 | 13 | 28 | 15 | 26 |
| Comparative example 1 | 12 | 25 | 20 | 20 |

Table 2

| | Initial characteristics | 60 °C 85%RH after 1000 hours |
|---|---|---|
| | S/N ratio (dB) | S/N ratio (dB) |
| Example 1 | 37 | 35 |
| Comparative example 1 | 32 | 25 |

In Example 1, sufficient S/N ratio was obtained, and also the result of substantially no change in storage stability was obtained. In contrast, in Comparative Example 1, as compared with Example 1, reflectance and S/N ratio were lower, and further storage stability was remarkably lowered.

Examples 2-4, Comparative examples 2-4

Optical recording media were prepared and evaluated according to entirely the same methods as in Example 1 except for using various dye compounds (A), (B) as shown in Table 3. The results are shown in Table 4 and Table 5.

Table 3

| | dye compound (A) | dye compound (B) |
| --- | --- | --- |
| Example 2 | 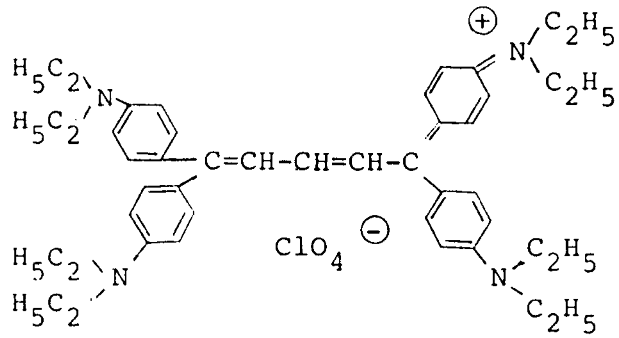 | 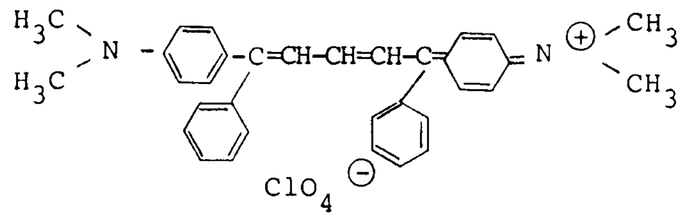 |
| | Absorption maximum (nm) 840 | 880 |
| Comparative example 2 | " | — |
| Example 3 | 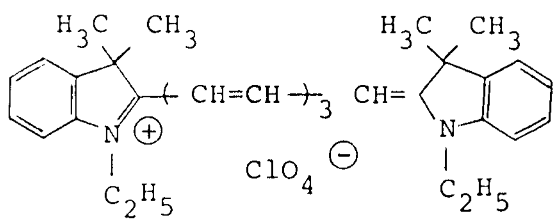 | 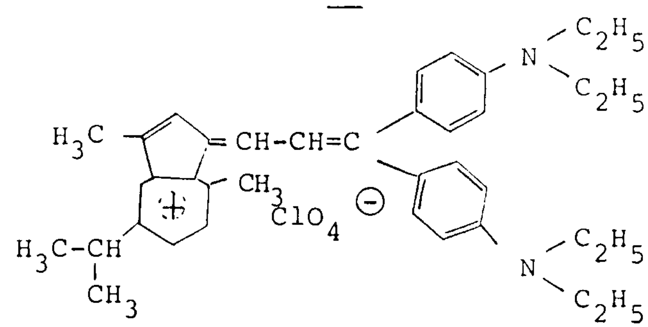 |
| | Absorption maximum (nm) 805 | 686 |

Table 3

Comparative example 3

Absorption maximum (nm) 805

Example 4

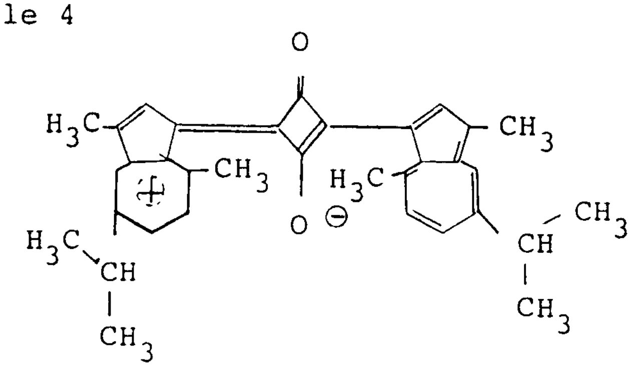

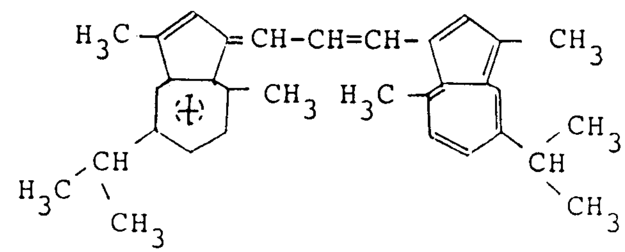

Absorption maximum (nm) 830

730

Comparative example 4 "

Table 4

| | Initial characteristics | | 60 °C 85%RH after 1000 hours | |
|---|---|---|---|---|
| | Transmittance (T) (%) | Reflectance (R) (%) | Transmittance (T) (%) | Reflectance (R) (%) |
| Example 2 | 16 | 30 | 17 | 28 |
| 3 | 20 | 31 | 24 | 27 |
| 4 | 15 | 29 | 17 | 28 |
| Comparative example 2 | 15 | 23 | 21 | 18 |
| 3 | 13 | 26 | 25 | 16 |
| 4 | 12 | 25 | 20 | 19 |

Table 5

| | Initial characteristics | 60 °C 85%RH after 1000 hours |
|---|---|---|
| | S/N ratio (dB) | S/N ratio (dB) |
| Example 2 | 38 | 36 |
| 3 | 38 | 33 |
| 4 | 37 | 34 |
| Comparative example 2 | 30 | 23 |
| 3 | 33 | 26 |
| 4 | 31 | 22 |

Example 5

As the dye compound (A), the above mentioned compound of the Formula 3 and as the dye compound (B), $\beta$-copper phthalocyanine (produced by Toyo Ink K.K.) were placed in two kinds of molybdenum boats

for vapor deposition, and after evacuation to 1 x $10^{-6}$ mmHg (1 mmHg = 1,33 mbar) or lower, co-vapor deposition was effected to a mixing ratio of the dye compounds (A) : (B) = 3 : 1 on a glass disc substrate with a thickness of 1.2 mm and a diameter of 20 mm to form a recording layer of 80 nm (800 Å), thus preparing an optical recording medium of Example 5.

(Structural formula 3)

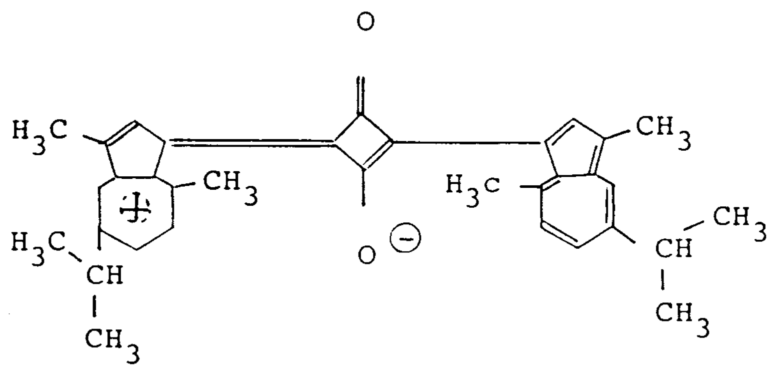

Comparative Example 5

An optical recording medium of Comparative Example 5 was prepared according to entirely the same method as in Example 5 except for omitting the dye compound (B) β-copper phthalocyanine in Example 5.

For the optical recording media of Example 5 and Comparative Example 5, transmittance (T), reflectance (R) and S/N ratio and environmental test results were examined according to the same method as in Example 1. The results are shown in Table 6 and Table 7.

Table 6

| | Initial characteristics | | 60 °C 85%RH after 1000 hours | |
|---|---|---|---|---|
| | Transmittance (T) (%) | Reflectance (R) (%) | Transmittance (T) (%) | Reference (R) (%) |
| Example 5 | 10 | 23 | 12 | 20 |
| Comparative example 5 | 9 | 20 | 17 | 14 |

Table 7

| | Initial characteristics | 60 °C 85%RH after 1000 hours |
|---|---|---|
| | S/N ratio (dB) | S/N ratio (dB) |
| Example 5 | 35 | 34 |
| Comparative example 5 | 29 | 20 |

As is apparent from comparison between Examples 2-4 and Comparative Examples 2-4 or between Example 5 and Comparative Example 5, the optical recording medium of the present invention is higher in S/N ratio and storage stability.

Further, each of the dye compounds (A) used in Examples 1 - 4 and the reflective organic substances (B) were dissolved in dichloroethane. The each solution was applied on a slide glass substrate by a rotatory coating machine to a dried film thickness of 100 nm (1000 Å).

Reflectance of the thus prepared samples were measured using a spectrophotometer of 15° specular reflection by irradiating light of 820 nm of a measurement wavelength from the glass substrate side. The results are shown in Table 8.

Table 8

| | Reflectance (R) (%) | |
|---|---|---|
| | Dye compound (A) | Reflective substance (B) |
| Example 1 | 25 | 29 |
| 2 | 23 | 33 |
| 3 | 26 | 34 |
| 4 | 25 | 32 |

## Claims

1. An optical recording medium comprising a substrate and a recording layer, the recording layer comprising at least a dye compound (A) having an absorption maximum in substantially the same wavelength region as the wavelength of a recording laser beam and a reflective dye compound (B) having high reflectance in substantially the same wavelength region as the wavelength of a reproduction laser beam, characterized in that said recording layer is formed so that its transmittance (T) relative to a beam having substantially the same wavelength as that of the recording laser beam is substantially equal to a transmittance of a dye layer consisting of the dye compound (A) alone relative to a beam having substantially the same wavelength as that of the recording laser beam.

2. An optical recording medium according to claim 1, wherein said recording layer has an optical reflectance of 10 % or higher relative to the reproduction laser beam with the same wavelength as that of the recording laser beam.

3. An optical recording medium according to claim 1, wherein said recording layer has an optical reflectance of 15 % or higher relative to the reproduction laser beam with the same wavelength as that of the recording laser beam.

4. An optical recording medium according to claim 1, wherein the value of the absorption maximum wavelength of the dye compound (A) is within the range of ±50 nm of the Wavelength of the recording laser beam, and the difference between the value of the absorption maximum wavelength of the dye compound (A) and the value of the wavelength of the recording laser beam is smaller than the difference between the value of the absorption maximum wavelength of the reflective organic compound (B) and the wavelength of the recording laser beam.

5. An optical recording medium according to claim 4, wherein the greatness of the difference between the value of the absorption maximum wavelength of the dye compound (A) and the value of the wavelength of the recording laser beam is 1/2 or less of the difference between the value of the absorption maximum wavelength of the reflective organic compound (B) and the wavelength of the recording laser beam.

6. An optical recording medium according to claim 1, in which said dye compound (A) is a compound represented by the formula (1):

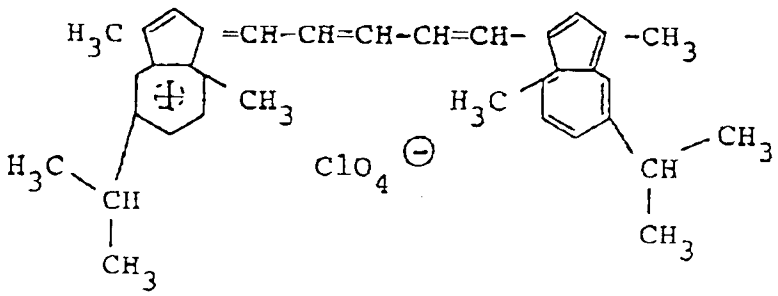
(1)

and said dye compound (B) is a compound represented by the formula (2):

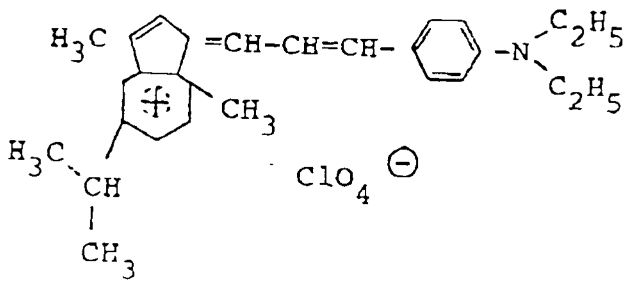
(2)

7. An optical recording medium according to claim 6, in which the mixing ratio of said dye compound (A) and said dye compound (B) in the recording layer is 2:1.

8. An optical recording medium according to claim 1, in which said dye compound (A) is a compound represented by the formula (3):

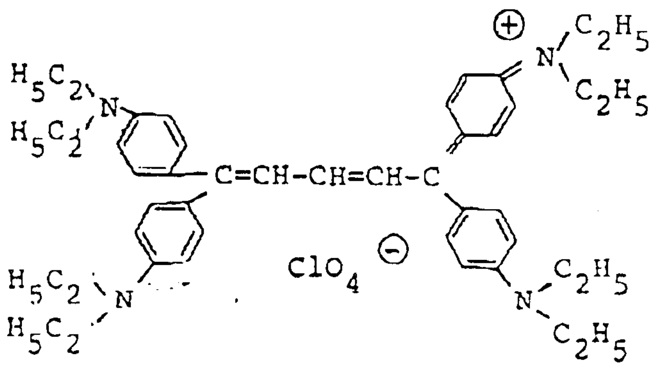
(3)

and said dye compound (B) is a compound represented by the formula (4):

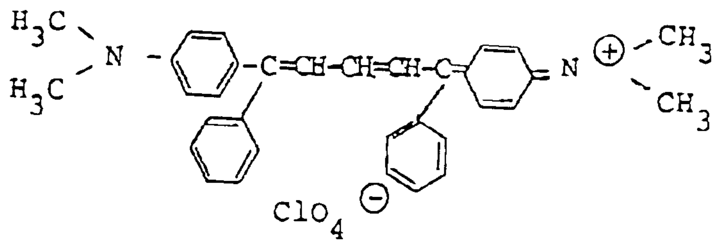
(4)

9. An optical recording medium according to claim 8, in which the mixing ratio of said dye compound (A) and said dye compound (B) in the recording layer is 2:1.

10. An optical recording medium according to claim 1, in which the wavelength of said recording laser beam is the same as the wavelength of said reproduction laser beam.

**Patentansprüche**

1. Optisches Aufzeichnungsmedium mit einem Substrat und einer Aufzeichnungsschicht, wobei die Aufzeichnungsschicht wenigstens eine Farbstoffverbindung (A), die ein Absorptionsmaximum in der im wesentlichen gleichen Wellenlängenregion, in der die Wellenlänge eines Aufzeichnungslaserstrahls liegt, hat, sowie eine reflektierende Farbstoffverbindung (B) aufweist, welche eine hohe Reflektionsstärke in der im wesentlichen gleichen Wellenlängenregion, in der die Wellenlänge eines Wiedergabelaserstrahls liegt, hat, dadurch gekennzeichnet, daß die Aufzeichnungsschicht so gebildet ist, daß ihre Durchlässigkeit (T) bezüglich eines Strahls, der im wesentlichen die gleiche Wellenlänge wie der Aufzeichnungslaserstrahl aufweist, im wesentlichen gleich der Durchlässigkeit einer Farbstoffschicht bezüglich eines Strahls, der im wesentlichen die gleiche Wellenlänge wie der Aufzeichnungslaserstrahl aufweist, ist, wobei die Farbstoffschicht allein aus der Farbstoffverbindung (A) aufgebaut ist.

2. Optisches Aufzeichnungsmedium nach Anspruch 1, bei dem die Aufzeichnungsschicht eine optische Reflektionsstärke von 10 % oder größer bezüglich des Wiedergabelaserstrahls mit der gleichen Wellenlänge wie die des Aufzeichnungslaserstrahls hat.

3. Optisches Aufzeichnungsmedium nach Anspruch 1, bei dem die Aufzeichnungsschicht eine optische Reflektionsstärke von 15 % oder größer bezüglich des Wiedergabelaserstrahls mit der gleichen Wellenlänge wie die des Aufzeichnungslaserstrahls hat.

4. Optisches Aufzeichnungsmedium nach Anspruch 1, bei dem der Wert der maximalen Absorptionswellenlänge der Farbstoffverbindung (A) innerhalb des Bereiches von ± 50 nm der Wellenlänge des Aufzeichnungslaserstrahls liegt und die Differenz zwischen dem Wert der maximalen Absorptionswellenlänge der Farbstoffverbindung (A) und dem Wert der Wellenlänge des Aufzeichnungslaserstrahls kleiner ist als die Differenz zwischen dem Wert der maximalen Absorptionswellenlänge der reflektierenden, organischen Verbindung (B) und der Wellenlänge des Aufzeichnungslaserstrahls.

5. Optisches Aufzeichnungsmedium nach Anspruch 4, bei dem die Höhe der Differenz zwischen dem Wert der maximalen Absorptionswellenlänge der Farbstoffverbindung (A) und dem Wert der Wellenlänge des Aufzeichnungslaserstrahls 1/2 oder weniger von der Differenz zwischen dem Wert der maximalen Absorptionswellenlänge der reflektierenden, organischen Verbindung (B) und der Wellenlänge des Aufzeichnungslaserstrahls beträgt.

6. Optisches Aufzeichnungsmedium, welches durch die Bestrahlung mit einem Laserstrahl auf eine Aufzeichnungsschicht eine Aufzeichnung und eine Wiedergabe durchführt, wobei die Aufzeichninngsschicht eine Farbstoffverbindung (A) und eine reflektierende, organische Verbindung (B) aufweist, die reflektierende, organische Verbindung eine Reflektionsstärke von 10 % oder größer bezüglich des Lichtes mit der maximalen Absorptionswellenlänge der Farbstoffverbindung (A) hat, und die reflektierende, organische Verbindung (B) eine größere Reflektionsstärke als die der Farbstoffverbindung (A) bezüglich des Lichts mit der maximalen Absorptionswellenlänge aufweist.

7. Optisches Aufzeichnungsmedium nach Anspruch 6, bei dem die reflektierende, organische Verbindung (B) eine Reflektionsstärke von 15 % oder größer bezüglich des Lichts mit der maximalen Absorptionswellenlänge der Farbstoffverbindung (A) hat.

8. Optisches Aufzeichnungsmedium nach Anspruch 6, bei dem die reflektierende, organische Verbindung (B) eine Reflektionsstärke bezüglich des Lichtes mit der maximalen Absorptionswellenlänge der Farbstoffverbindung (A) aufweist, die größer ist als der um 3 % erhöhte Wert der Reflektionsstärke der Farbstoffverbindung (A) bezüglich des Lichtes mit der maximalen Absorptionswellenlänge.

9. Optisches Aufzeichnungsmedium nach Anspruch 1, bei dem die Farbstoffverbindung (A) eine Verbindung ist, die durch die Formel (1) dargestellt ist:

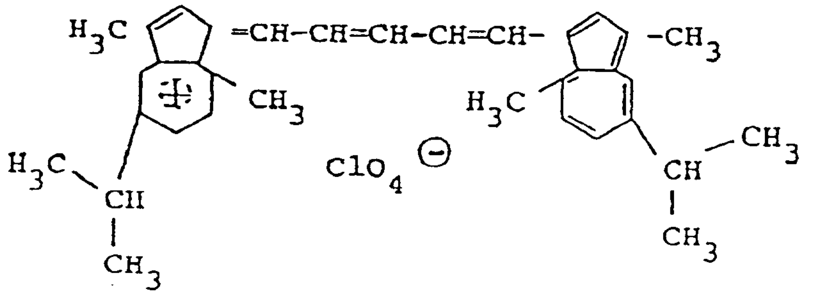

(1)

und die Farbstoffverbindung (B) eine Verbindung ist, die durch die Formel (2) dargestellt ist:

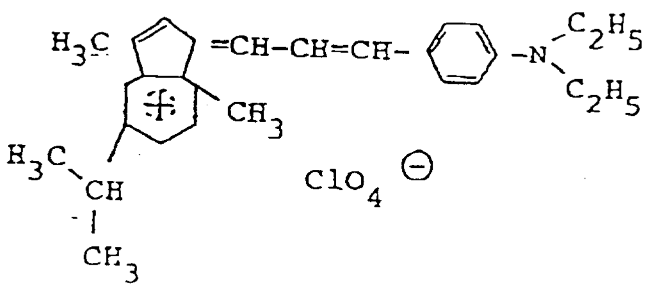

(2)

10. Optisches Aufzeichnungsmedium nach Anspruch 9, bei dem das Mischungsverhältnis der Farbstoffverbindung (A) und der Farbstoffverbindung (B) in der Aufzeichnrnngsschicht 2:1 beträgt.

11. Optisches Aufzeichnungsmedium nach Anspruch 1, bei dem die Farbstoffverbindung (A) eine Verbindung ist, die durch die Formel (3) dargestellt ist:

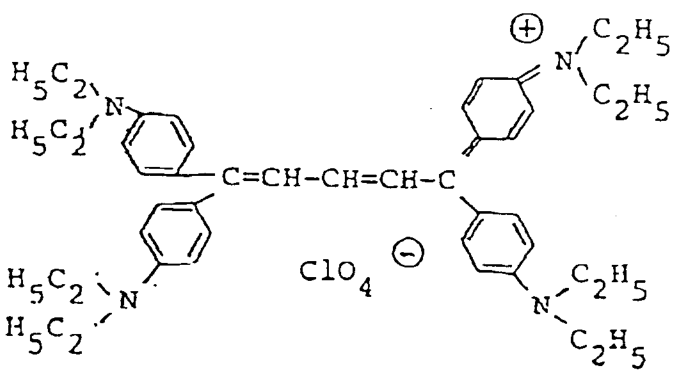

(3)

und die Farbstoffverbindung (B) eine Verbindung ist, die durch die Formel (4) dargestellt ist:

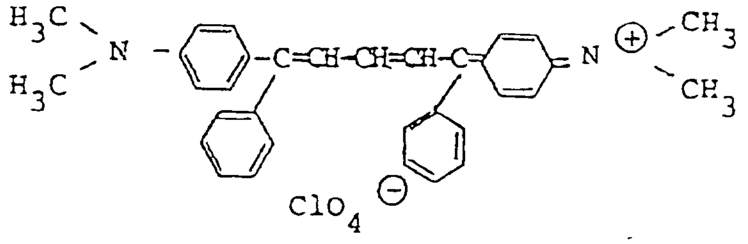

(4)

**12.** Optisches Aufzeichnungsmedium nach Anspruch 11, bei dem das Mischungsverhältnis der Farbstoffverbindung (A) und der Farbstoffverbindung (B) in der Aufzeichnungsschicht 2:1 beträgt.

**13.** Optisches Aufzeichnungsmedium nach Anspruch 1, bei dem die Wellenlänge für den Aufzeichnungslaserstrahl die gleiche wie die Wellenlänge für den Wiedergabelaserstrahl ist.

**Revendications**

**1.** Support d'enregistrement optique comprenant un substrat et une couche d'enregistrement, la couche d'enregistrement comprenant au moins un colorant (A) possédant un maximum d'absorption pratiquement dans la même région de longueur d'onde que la longueur d'onde d'un faisceau laser d'enregistrement, et un colorant réfléchissant (B) ayant une forte réflectance pratiquement dans la même région de longueur d'onde que la longueur d'onde d'un faisceau laser de reproduction, caractérisé en ce que ladite couche d'enregistrement est formée de telle sorte que sa transmittance (T) vis-à-vis d'un faisceau ayant pratiquement la même longueur d'onde que celle du faisceau laser d'enregistrement soit pratiquement égale à une transmittance d'une couche de colorant consistant en le colorant (A) seul vis-à-vis d'un faisceau ayant pratiquement la même longueur d'onde que celle du faisceau laser d'enregistrement.

**2.** Support d'enregistrement optique suivant la revendication 1, dans lequel la couche d'enregistrement possède une réflectance optique égale ou supérieure à 10 % vis-à-vis du faisceau laser de reproduction ayant la même longueur d'onde que celle du faisceau laser d'enregistrement.

**3.** Support d'enregistrement optique suivant la revendication 1, dans lequel la couche d'enregistrement possède une réflectance optique égale ou supérieure à 15 % vis-à-vis du faisceau laser de reproduction ayant la même longueur d'onde que celle du faisceau laser d'enregistrement.

**4.** Support d'enregistrement optique suivant la revendication 1, dans lequel la valeur de la longueur d'onde maximale d'absorption du colorant (A) est comprise dans l'intervalle de ± 50 nm de la longueur d'onde du faisceau laser d'enregistrement, et la différence entre la valeur de la longueur d'onde maximale d'absorption du colorant (A) et la valeur de la longueur d'onde du faisceau laser d'enregistrement soit inférieure à la différence entre la valeur de la longueur d'onde maximale d'absorption du composé organique réfléchissant (B) et la longueur d'onde du faisceau laser d'enregistrement.

**5.** Support d'enregistrement optique suivant la revendication 4, dans lequel l'étendue de la différence entre la valeur de la longueur d'onde maximale d'absorption du colorant (A) et la valeur de la longueur d'onde du faisceau laser d'enregistrement est égale ou inférieure à la moitié de la différence entre la valeur de la longueur d'onde maximale d'absorption du composé organique réfléchissant (B) et la longueur d'onde du faisceau laser d'enregistrement

**6.** Support d'enregistrement optique qui effectue un enregistrement et une reproduction par irradiation de la surface d'une couche d'enregistrement avec un faisceau laser, dans lequel la couche d'enregistrement comprend un colorant (A) et un composant organique réfléchissant (B), ledit composé organique réfléchissant ayant une réflectance égale ou supérieure à 10 % vis-à-vis de la lumière ayant une longueur d'onde maximale d'absorption du colorant (A), ledit composé organique réfléchissant (B) ayant une réflectance supérieure à celle du colorant (A) vis-à-vis de la lumière ayant ladite longueur d'onde

maximale d'absorption.

7. Support d'enregistrement optique suivant la revendication 6, dans lequel le composé organique réfléchissant (B) possède une réflectance égale ou supérieure à 15 % vis-à-vis de la lumière ayant la longueur d'onde maximale d'absorption du colorant (A).

8. Support d'enregistrement optique suivant la revendication 6, dans lequel le composé organique réfléchissant (B) possède une réflectance vis-à-vis de la lumière ayant la longueur d'onde maximale d'absorption du colorant (A) qui est supérieure à la valeur de la réflectance du colorant (A) vis-à-vis de la lumière ayant ladite longueur d'onde maximale d'absorption augmentée de 3 %.

9. Support d'enregistrement optique suivant la revendication 1, dans lequel le colorant (A) est un composé représenté par la formule (1) :

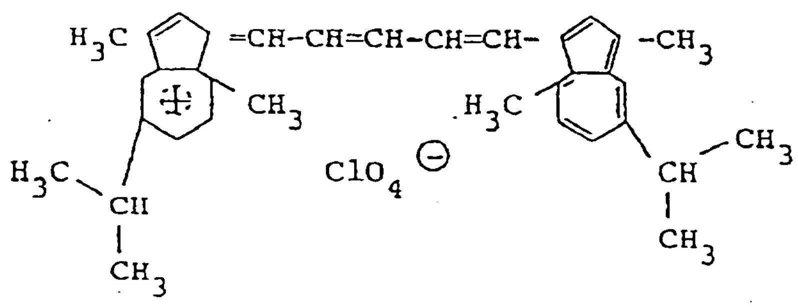

(1)

et le colorant (B) est un composé représenté par la formule (2) :

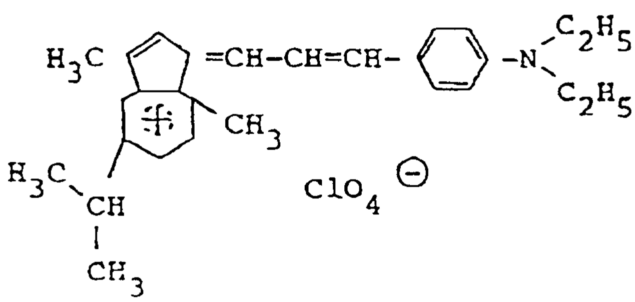

(2)

10. Support d'enregistrement optique suivant la revendication 9, dans lequel le rapport de mélange du colorant (A) au colorant (B) dans la couche d'enregistrement est égal à 2:1.

11. Support d'enregistrement optique suivant la revendication 1, dans lequel le colorant (A) est un composé représenté par la formule (3) :

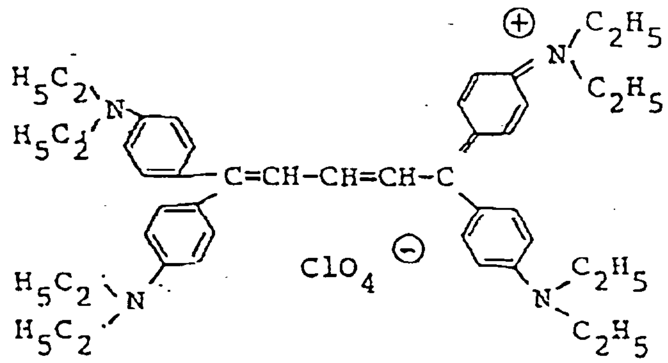

(3)

et le colorant (B) est un composé représenté par la formule (4) :

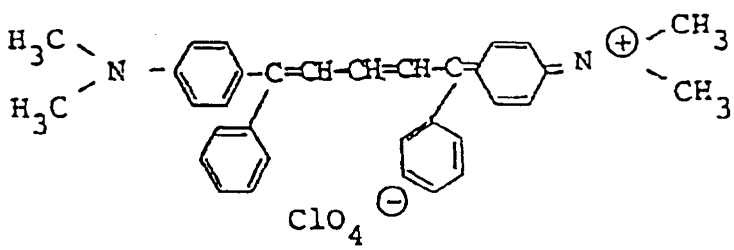

(4)

12. Support d'enregistrement optique suivant la revendication 11, dans lequel le rapport de mélange du colorant (A) au colorant (B) dans la couche d'enregistrement est égal à 2:1.

13. Support d'enregistrement optique suivant la revendication 1, dans lequel la longueur d'onde pour le faisceau laser d'enregistrement est identique à la longueur d'onde pour le faisceau laser de reproduction.

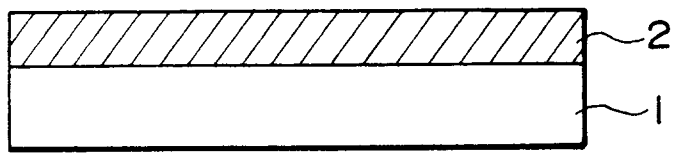


FIG. 1

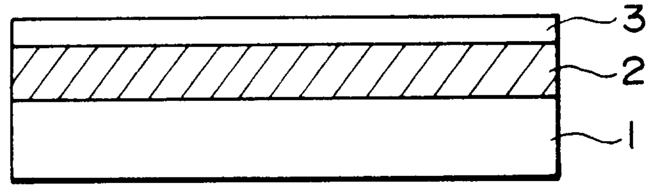


FIG. 2

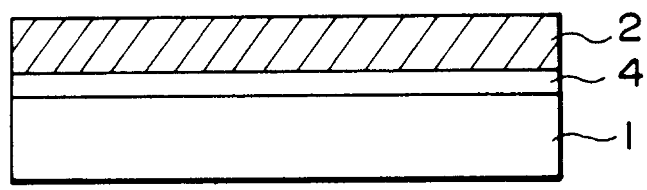


FIG. 3

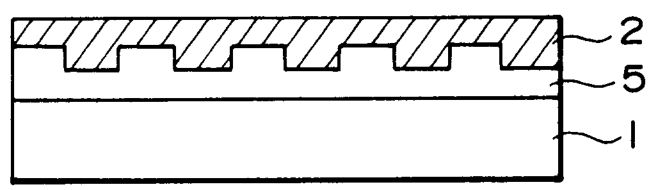


FIG. 4

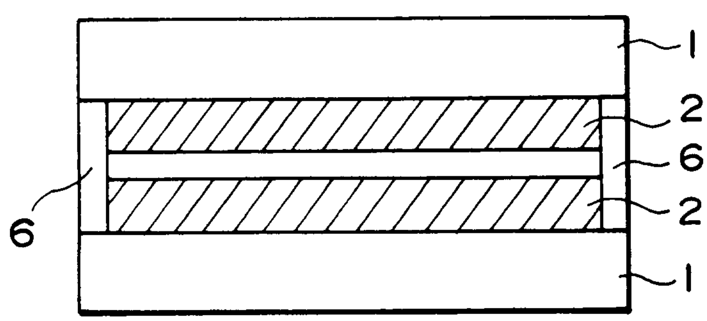


FIG. 5